# EUROPEAN PATENT APPLICATION

(11) **EP 4 242 255 A1**
(43) Date of publication of application: **13.09.2023**
(21) Application number: 22161081.9
(22) Date of filing: 09.03.2022
(51) Int. Cl.: C08J 7/048, C08J 7/06, C08J 7/12, D21H 19/02, D21H 19/10, D21H 19/26, D21H 19/82

(54) **PRINTABLE SUBSTRATES WITH BARRIER PROPERTIES**

(71) Applicant: Knowfort Holding B.V., 6167 RD Geleen (NL)
(72) Inventor: JAHROMI, Shahab, 6211 PA MAASTRICHT (NL)
(74) Representative: Hoyng Rokh Monegier B.V.

(57) **Abstract**

The invention relates to a coated substrate comprising a substrate and a crystalline triazine layer, said crystalline triazine layer comprising alkylolated triazine wherein said layer is resistance to alcohol. The crystalline triazine layer may comprise alkylether and/or alkylene bridged triazine. The process for preparing a coated substrate comprises providing a coated substrate having a crystalline triazine layer wherein the substrate optionally has a metal or metal oxide layer between the substrate and the triazine layer, and applying a vapor of a reactive compound capable of chemically reacting to the said triazine layer, such that the triazine is alkylolated and/or that the triazine layer comprises alkylether and/or alkylene bridged triazine.

## Description

The invention relates to printable substrates with barrier properties and to methods providing such substrates.

### Background of the invention

In a number of industries, barrier properties with respect to e.g. oxygen transmission and water vapor transmission are important. For instance, in the food and feed industry, oxygen barrier is important to preserve food and feed products. In the display industry, also high oxygen barrier is important to protect oxygen sensitive chemical compounds. For both applications, the barrier properties of single thin layer plastics are generally insufficient. Hence, so-called barrier layers are applied on these substrates to improve the barrier properties.

Currently, substrates with good transparent barrier properties are well known in the art. Commonly used are SiOx or AlOx layers which are vacuum deposited on plastic films. However, these coatings have as disadvantage that they are very brittle and therefore lose their barrier properties during downstream processing steps such as slitting and printing. In particular direct printing on these coatings results in dramatic loss in barrier. To maintain barrier after printing, these films are often coated offline, i.e. after vacuum deposition step, with a lacquer. However, this requires additional processing steps and high investments. In addition, these lacquers are not suitable for application on temperature sensitive polymers such polyethylene (PE). For example, PE-AlOx coated with water-based lacquers may loose its barrier properties due to shrinkage of PE especially during the drying step at high temperature in the oven necessary to remove water. Due to environmental considerations, recyclable mono-PE laminates are in high demand as an alternative for non-recyclable multi-layer laminates. However, these mono-PE laminates cannot be used for critical applications where high barrier after direct printing is needed. It should be furthermore added that offline lacquers are often coated at a coating weight between 0.5-1.0 gram per square meter negatively affecting recyclability of mono-PE laminates. For such critical applications, it is furthermore important that the barrier properties are independent from relative humidity (RH). In addition, barrier properties of PE film is inferior to the barrier properties of the films currently used in multi-layer laminates, such as PET. Therefore, barrier properties achieved with vacuum coated PE are often inferior to the barrier properties achieved with vacuum coated PET. To replace multi-layer laminates based on PET with mono-laminates based on PE, it is important to achieve similar barrier values with vacuum coated PE as with PET counterparts. There is therefore a need to improve the quality and effectiveness of vacuum coated barrier layers without affecting recyclability of plastic films.

It is possible to protect an AlOx layer with a thin layer of crystalline triazine such as melamine. In addition to protection, a thin layer of crystalline triazine can improve the barrier properties of AlOx and other vacuum coated layers such as aluminum which is important because as indicated above without additional barrier enhancement, vacuum coated PE cannot reach similar barrier values as vacuum coated PET. In addition melamine is biodegradable and has minimum effect on recyclability because it is coated as much thinner layers as compared with offline lacquers. Melamine can be deposited on a substrate through vacuum deposition.

However, the protective properties and barrier enhancement of a crystalline melamine coating deteriorate in direct printing processes, depending on the solvent used in the printing ink.

It is possible to apply a crystalline triazine layer directly on a substrate, which crystalline triazine layer provides for example oxygen barrier properties to the substrate. Also these barrier properties may deteriorate with direct printing or in the presence of moisture.

Hence, there is a need for an alternative transparent barrier layer, which has good barrier properties after downstream processing steps such as direct printing with a wide variety of inks. Furthermore the alternative transparent barrier layer should be preferably biodegradable with minimum effect of recyclability and applicable on temperature sensitive polymers such as PE achieving and retaining high barrier and/or of which the barrier properties are largely independent from RH.

### Summary of the invention

It is an object of the invention to provide a substrate with barrier properties which barrier properties are not substantially affected by direct printing.

It is a further object of the invention to provide substrate with barrier properties which barrier properties are largely independent of RH.

It is a further object of the invention to provide a printed multilayer structure having good barrier properties and bond strength which are optionally biodegradable and/or recyclable.

One or more of the above objects are achieved with the current invention by providing a coated substrate comprising a substrate and a layer of crystalline triazine, said crystalline triazine layer comprising alkylolated triazine wherein said layer is resistance to alcohol.

In a preferred embodiment, the crystalline triazine layer comprises alkylether and/or alkylene bridged triazine wherein said layer is resistance to alcohol.

One or more of the above objects are furthermore achieved with the current invention by a process for preparing a coated substrate, the process comprising:
a) providing a substrate having a crystalline triazine layer wherein the substrate optionally has a metal or metal oxide layer between the substrate and the triazine layer.
b) applying a vapor of a reactive compound capable of chemically reacting to the said triazine layer, such that the triazine is alkylolated and/or that the triazine layer comprises alkylether and/or alkylene bridged triazine.

In a preferred embodiment, the reactive compound is an aldehyde, more preferably formaldehyde.

In a further preferred embodiment, the reactive compound is dissolved in water.

In a further preferred embodiment, the treatment of crystalline triazine layer with a vapor of a reactive compound is carried out in a continuous roll-to-roll process at atmospheric pressure incorporated for example in a slitting machine.

In a further preferred embodiment, the treatment of crystalline triazine layer with a vapor of a reactive compound is carried out in a continuous roll-to-roll process under reduced pressure preferably directly after deposition of crystalline triazine layer.

### Short description of the drawings

Fig. 1: schematic representation of a continuous roll-to-roll treatment unit
Fig. 2: modified schematic representation of a roll-to-roll treatment unit
Fig. 3: exemplary scheme to regulate the pressure and volume and temperature of the steam into the nozzles
Fig. 4: an embodiment of a steam treatment unit, placed in a vacuum chamber
Fig. 5: an embodiment in which heated shields are added to the steam pipe
Fig. 6 photographic images on the effect of a droplet of ethanol on melamine coating both before (a) and after (b) treatment with steam and formaldehyde
Fig. 7: tape test on printed melamine coating both before (a) and after (b) the steam with formaldehyde treatment.

### Detailed description of the invention

Crystalline triazine layers, like for example crystalline melamine layers, have been described as barrier layer for lowering oxygen transmission through substrates of plastic, such as of polypropylene or polyethylene-terephthalate (see e.g. US 6632519, WO2004/101662 or WO2004/101843). Crystalline triazine layer is preferably applied under reduced pressure (vacuum) on various substrates. Although the oxygen transmission is indeed reduced substantially, the improved barrier properties disappear after printing (with alcohol-based inks) and/or after measurement at 85% RH. Furthermore the bond strength of the laminates comprising printed crystalline triazine layer is lower as compared with the bond strength of laminates comprising unprinted crystalline triazine layer.

A method to retaining the barrier properties of crystalline triazine layers at high relative humidity and/or after printing, have been described by applying a protective layer on the crystalline triazine layer (see e.g. US 8318276). This method however has the disadvantage that it requires additional processing steps and investments.

Surprisingly it has been found that by exposing crystalline triazine layer to a vapor of a reactive compound in a way, such that the triazine is alkylolated and/or that the triazine layer comprises alkylether and/or alkylene bridged triazine, the crystalline triazine layer maintains its barrier properties after direct printing with alcohol-based inks and/or measured at 85% RH. Furthermore the bond strength of the laminates comprising printed crystalline triazine layer treated with the vapor of a reactive compound is higher than the bond strength of laminates comprising untreated printed crystalline triazine layer.

This method has the advantage that it can be carried out in the vacuum chamber directly after deposition of crystalline triazine layer.

Alternatively, this method can also be readily incorporated in downstream processing steps such as slitting. Vacuum coated films are often slitted and cut in various seizes. The steam treatment equipment can be retrofitted for example in a slitting machine and therefore combined with slitting operation.

Since most inks used in packaging industry contains alcohols like ethanol as the solvent, resistance to alcohols is an indication that the layer is not damaged by such solvents which is a prerequisite for good printability. Below it is shown with a simple method whether ethanol damages a surface. According to this method a drop of ethanol is applied to the surface of crystalline triazine layer like for example crystalline melamine layer. After evaporation of ethanol a white spot appears on the surface of crystalline melamine layer observable by naked eye indicating that the layer has been damaged by action of ethanol. However, the crystalline melamine layer comprising alkylolated, and alkylether and/or alkylene bridged melamine does not leave a spot indicating that the layer has not been damaged by the action of ethanol.

Comparable results were observed when a drop of water was put on the crystalline melamine surface. An unprotected film resulted in a white spot, while after treatment according the present invention, no damage was observed.

The process to provide a crystalline triazine layer wherein the triazine is alkylolated and/or that the triazine layer comprises alkylether and/or alkylene bridged triazin, comprises providing a vapor of a reactive compound containing chemical functionalities capable of reacting with crystalline triazine layer.

In one embodiment of the invention, the vapor of a reactive compound contains at least one aldehyde group.

Preferred reactive compounds comprise one or two aldehyde groups and have a molecular weight of between 30 and 300 dalton, more preferably between 30 and 100 dalton.

Suitable aldehydes include, but not limited to C1-C20 straight chain, branched, or cyclic aliphatic aldehydes, C2-C20 straight chain, branched, or cyclic alkenyl aldehydes, C2-C20 straight chain, branched, or cyclic alkynyl aldehydes, C6-C14 aromatic aldehydes, and C4-C14 heteroaromatic aldehydes.

The term "alkenyl group" includes within its meaning monovalent ("alkenyl") and divalent ( "alkenylene" )straight or branched chain unsaturated aliphatic hydrocarbon groups having from 2 to 10 carbon atoms, e.g., 2, 3, 4, 5, 6, 7, 8, 9, or 10 carbon atoms and having at least one double bond, of either E, Z, cis or trans stereochemistry where applicable, anywhere in the alkyl chain. Examples of alkenyl groups include but are not limited to ethenyl, vinyl, allyl, 1-methylvinyl, 1- propenyl, 2-propenyl, 2-methyl-1-propenyl, 2-methyl-1- propenyl, 1-butenyl, 2-butenyl, 3-butentyl, 1,3- butadienyl, 1-pentenyl, 2-pententyl, 3-pentenyl, 4- pentenyl, 1 , 3 -pentadienyl , 2 , 4-pentadienyl, 1,4- pentadienyl, 3 -methyl-2-butenyl, 1-hexenyl, 2-hexenyl, 3- hexenyl, 1, 3 -hexadienyl , 1, 4-hexadienyl, 2- methylpentenyl , 1-heptenyl, 2-heptentyl, 3-heptenyl, 1- octenyl, 1-nonenyl, l-decenyi; and the like.

The term "alkynyl group" as used herein includes within its meaning monovalent ("alkynyl") and divalent ("alkynylene") straight or branched chain unsaturated aliphatic hydrocarbon groups having from 2 to 10 carbon atoms and having at least one triple bond anywhere in the carbon chain. Examples of alkynyl groups include but are not limited to ethynyl, 1-propynyl, 1-butynyl, 2-butynyl, 1-methyl-2-butynyl, 3 -methyl-1-butynyl, 1-pentynyl, 1- hexynyl, methylpentynyl , 1-heptynyl, 2-heptynyl, 1- octynyl, 2-octynyl, 1-nonyl, 1-decynyl, and the like.

The term "cycloalkyl" as used herein refers to cyclic saturated aliphatic groups and includes within its meaning monovalent ("cycloalkyl"), and divalent ("cycloalkylene"), saturated, monocyclic, bicyclic, polycyclic or fused polycyclic hydrocarbon radicals having from 3 to 10 carbon atoms, e.g., 3, 4, 5, 6, 7, 8, 9, or 10 carbon atoms. Examples of cycloalkyl groups include but are not limited to cyclopropyl, 2- methylcyclopropyl , cyclobutyl, cyclopentyl, 2-methylcyclopentyl, 3-methylcyclopentyl, cyclohexyl, and the like.

The term "aromatic group", or variants such as "aryl" or "arylene" as used herein refers to monovalent ("aryl") and divalent ("arylene") single, polynuclear, conjugated and fused residues of aromatic hydrocarbons having from 6 to 10 carbon atoms. Examples of such, groups include phenyl, biphenyl, naphthyl, phenanthrenyl, and the like.

Exemplary aldehyde include but are not limited to formaldehyde (methanal), acetaldehyde (ethanal), propionaldehyde (propanal), butyraldehyde (butanal), pentanals, hexanals, cyclopentanecarbaldehyde, cyclohexanecarbaldehyde, benzaldehyde (phenylmethanal), cinnamaldehyde, vanillin, tolualdehyde, furfural, retinaldehyde and dimethoxyethanal. Examples of dialdehyde include but not limited to glyoxal, butanedial, and 1,5-pentanedial (Glutaraldehyde).

Reaction of amine groups of the triazine compound with aldehydes produces alkylolated triazine compound (Reaction I). Reaction of alkylolated triazine with the amine groups of other triazine compounds produces alkylene bridges (Reaction IIa). Reaction between alkylolated triazine compounds produces alkylether bridges (Reaction IIb).

Reaction I shows the reaction of primary amine groups with aldehyde. It is also possible that secondary amine groups of the triazine compound react with aldehyde producing alkylolated triazine which in turn can react according to reactions IIa and IIb to form alkylene and alkylether bridges. Therefore, depending on the chemical structure of triazine and number of amine groups, many different alkylolated triazine compounds can be produced which in turn can form alkylene and alkylether bridges.

R₁-NH₂ + (R₂-COH).H₂O→ R₁-NH-CHR₂OH + H₂O Reaction I

R₁-NH-CHR₂OH + R₁-NH₂→ R₁-NH-CHR₂-NH-R₁ + H₂O Reaction IIa

R₁-NH-CHR₂OH + R₁-NH-CHR₂OH→ R₁-NH-CHR₂O-CHR₂-NH-R₁+ H₂O Reaction IIb

Where: R₁= Triazine; R₂= H, -CH₃, and -(CH₂)ₙ-CH₃ with n≥ 1, cyclic alkenyl, cyclic alkynyl, C6-C14 aromatic, and C4-C14 heteroaromatic

In a preferred embodiment of the invention, the vapor of a reactive compound contains formaldehyde (R₂= H).

In one embodiment of the invention, the vapor of a reactive compound contains dimethoxyethanal.

In a further preferred embodiment of the invention, the vapor of a reactive compound contains glyoxal (R₂ = -CH=O). Reaction products of a triazine compound such as melamine with glyoxal is for example outlined in a paper by Xi et al entitled "Melamine-Glyoxal-Glutaraldehyde Wood Panel Adhesives without Formaldehyde" (Polymers 2018; 10:22).

Reaction products as shown in Reactions I, IIa ad IIb can be detected by different analytical methods such as ¹³C-NMR. The spectra were recorded on a Varian unity 300 using DMSO as the solvent. Spectra with complete decoupling by ¹H noise irradiation were measured with a pulse (908 width) repetition time of 11 s (1 s acquisition plus 10 s delay). The NMR spectra were analyzed according to the assignment of the peaks presented by Tomita and Ono (J Polym Sci: Polym Chem 1979; 17:3205). Other methods include High-performance liquid chromatography (HPLC) as outlined by Jahromi (Macromolecular Chemistry and Physics 1999; 200: 2230-2239), and Fourier-transform infrared spectroscopy (FTIR) and matrix-assisted laser desorption/ionization mass spectroscopy (MALDI-TOF) as explained by Xi et al (Polymers 2018; 10:22).

The treatment with the vapor of a reactive compound is preferably carried out in a continuous roll-to-roll process at atmospheric pressure or reduced pressure.

In an alternative embodiment of the invention, the chemical functionalities include acids, ketones, esters, epoxides, anhydrides, isocyanates, azo, diazo, azido, hydrazine, azide, acrylates, acrylic acids, amides, imides, sulfonates, phosphonates, and peroxides, which are applied to the surface of the crystalline triazine layer in a way that a crosslinking reaction occurs.

In a further preferred embodiment, the vapor of a reactive compound is generated by a steam generator. The steam generator is for example supplied with a solution of a reactive compound dissolved in a solvent, preferably water.

The reactive compound is preferably formaldehyde dissolved in water, also called formalin. The weight percentage of formaldehyde in water is preferably 37% w/w or less, more preferably 10% w/w or less. The amount of formaldehyde generally is 0.01% w/w or more, preferably 0.1% w/w or more.

The pH of formalin is generally between 5 and 10, preferably between 6 and 8, even more preferably pH is about 7.

The pressure of steam generator is preferably 20 bar or less, more preferably 10 bar or less, even more preferably 5 bar or less. The pressure of the superheated steam generally is about 1.1 bar or more. The pressure of the steam generator is directly related to the output of the steam, i.e. the higher the pressure, the higher the output.

The amount of steam dispersed on substrate depends on the width of the substrate and is preferably 100 kg/hour or less, more preferably 20 kg/hour, even more preferably 10 kg/hour or less. Generally, the amount of steam is about 0.1 kg/hour or more.

In a further preferred embodiment, the saturated steam is supplied to a superheater generating superheated steam. The temperature of superheated steam is preferably 1200°C or less, more preferably 700°C or less, even more preferably 400°C or less. Generally, the temperature of the superheated steam is 150°C or more, preferably 200 °C or more.

In order to achieve a reaction of the triazine layer with the reactive compound, it appears important to have sufficient heat applied to the crystalline triazine layer by allowing a sufficient amount of hot steam to reach the triazine layer, as exemplified below.

### General description of the apparatus and process

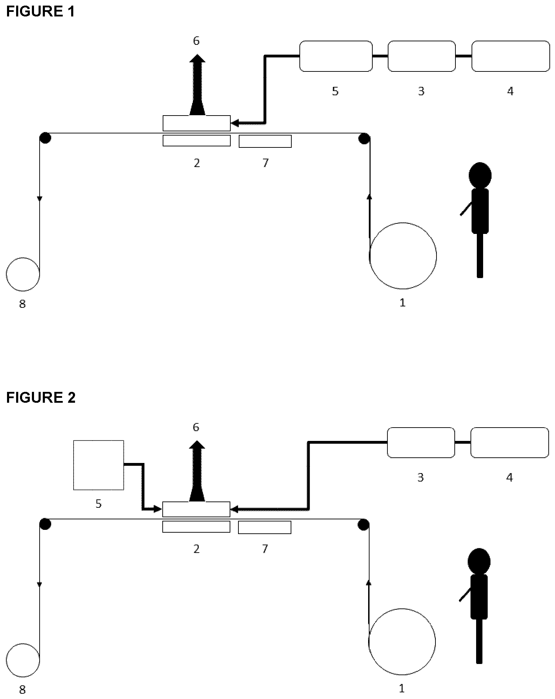

A schematic of a continuous roll-to-roll treatment unit is shown in figure 1. The general description provided hereinbelow applies to a variety of methods.

A substrate coated with a crystalline triazine layer (1) is fed into the steam box (2). Boiler (3), supplied with a solution of a reactive compound, e.g. formalin (4), generates saturated steam which is then superheated by superheater (5). A superheater is a device used to convert saturated steam or wet steam into superheated steam or dry steam.

Surprisingly we have found that the use of superheated steam reduces condensation of water on substate (1). Furthermore the use of superheater allows faster reaction because of higher temperatures and thus faster line speed, i.e. productivity. The use of superheater also allows to increase the temperature without increasing pressure. There are various types of electrically or gas fired superheaters. Suitable superheaters are produced by Company Heat Systems such as Electrical process heater and various types of heat exchangers (https://www.heatsystems.de/heating.html).

Excess steam is discharged by Exhaust pipe (6). The substrate coated with a crystalline triazine layer (1) is optionally pre-heated with an Infrared (IR) heater (7) or other heating methods commonly used by a person skilled in the art, such as electron beam or other radiation sources like Ultraviolet (UV) or Near Infrared (NIR). It is also possible to place the heater (7) after the steam box (2). Furthermore it is possible to guide the substrate (1) over a temperature-controlled coating drum in which case the temperature of the substrate is the temperature at which the coating drum is controlled. One method of ensuring that the substrate has a defined temperature is applicable in case there is at least one section, plane or side of the substrate where no treatment is carried out; the said section, plane or side can then be brought into contact with a heated surface to bring the temperature to a desired level and keep it there.

The substrate (1) treated with a superheated gas of formalin is collected on a roll (8).

Steam Box (2) consists of pipes with holes of various diameters out which superheated steam flows. The pipes can be connected and placed parallel to each other. The number of pipes is preferably 20 or less, more preferably 10 or less, even more preferably 5 or less. The number of pipes is 1 or more.

The diameter of the holes is 10mm or less, more preferably 1mm, even more preferably 0.5mm or less. Generally, the size of the nozzle is about 0.1mm or more. It is also possible to mount nozzles on the pipes. Nozzles have different diameters, spray angle and spray shape such as flat fan spray nozzles or flat cone spray nozzles. Suitable spray nozzles is for example produced by Company Spraying Systems Co. (https://www.spray.com/products/nozzles) or Euspray (https://www.euspray.com/en/home-page-en/).

Preferably, a pipe is used with nozzles that are of the flat fan type. The spray angle is 150° or less, more preferably 130° or less, even more preferably 110° or less. Generally, the angle is 90° or more.

The number of nozzles and distance between the nozzles depends on the spray angle and is determined in such a way that the nozzles create substantially continuous and uniform spray along the pipe at a distance of preferably 10 cm or less from the substrate, even more preferably 5 cm or less. Generally, the distance is 0.5 cm or more.

The speed of the roll-to-roll line is preferably 40 m/s or less, more preferably 15 m/s, even more preferably 5 m/s or less. Generally, the speed of the roll-to-roll line is 1 m/s or more.

The steam pipes and pipes connecting the superheater (5) to the steam box (2) are preferably heated to the same temperature as the temperature of superheated steam. The heating of the steam pipe and connecting pipes is preferably carried out by electric heat tracing using heat cables provided for example by Company Bartec (www.bartec.de). The heating cables are preferably of the type EMK VA 4000 NiCr. The steam pipe and connecting pipes heated with heating cables are preferably insulated with an insulation material. The insulation material is for example 100mm Rockwool.

All the materials in contact with superheated steam including steam pipe, connecting pipes and the nozzles are preferably made from stainless steel of different type such as Austenitic, Ferritic and Martensitic. Austenitic stainless steels such as SUS304, and alloys such as INCONEL (registered trademark), each of which has high heat resistance and high mechanical proof stress, are used for an induction heating type or electrical heating type superheated steam generation. The material can be for example 304 stainless steel which is the most common stainless steel. The steel contains both chromium (between 18% and 20%) and nickel (between 8% and 10.5%) metals as the main non-iron constituents. Other suitable type include 316 grade stainless steel which is an austenitic form of stainless steel known for its 2-3% molybdenum content, or 310 type which has a higher chromium content (24-26%) as compared to type 304 (10-20%), and nickel content (19-22%) vs 304 (8-10.5%). In case of inductive heating, a nonmagnetic material such as SUS 316L is used. However, the material of the conductive pipe is not limited to SUS 316L but may be a material such as an INCONEL alloy (Japanese Industrial Standard (JIS) alloy No. NCF601).

Another preferred method to heat the steam pipe and connecting pipes is by jacketed piping. Jacketed piping systems feature a core pipe surrounded by a jacket pipe. Superheated steam flows through the core pipe, while a heating medium flows in the annular space between the core and jacket pipes. The heating medium can be the superheated steam generated by the same superheater or a separate superheater. The heating medium can also be a thermal oil such as Marlotherm SH produced by Eastman (https://chem-group.com/wp-content/uploads/2020/07/Marlotherm-SH-TDS.pdf). The thermal oil is heated for example by i-Temp oil temperature control unit produced by ICS Cool Energy (https://www.icscoolenergy.com/sales/product/oil-temperature-control-unit/).

The amount of steam dispersed on substrate depends on the width of the substrate and is preferably 100 kg/hour or less, more preferably 20 kg/hour, even more preferably 10 kg/hour or less. Generally, the amount of steam is about 0.1 kg/hour or more.

The width of the substrate can vary and may be for example between 500 and 6000mm. The preferred widths are about 1250mm, 1650mm, 2450mm and 2850mm, as these re currently standard widths.

The width of the substrate is preferably 6000mm or less, more preferably 2850mm or less. The width preferably is about 1250mm or more.

In a preferred embodiment, boiler (3) and superheater (5) are combined into one unit. A suitable unit of such kind is superheated steam generator of W-series produced by Tokuden (www.tokuden.com).

A modified schematic of a roll-to-roll treatment unit is shown in figure 2. Here the superheater is replaced with a heating unit (5) which heats the steam pipe only. Saturated steam enters the steam pipe which is then converted into superheated steam. This method has the advantage that the connecting pipes no longer need to be heated.

A suitable equipment as the heating unit is Utility Power Super Steamer (UPSS) of the type D-series produced by Tokuden (www.tokuden.com). Such units are further described in US10337725B2 and US2019/0195531A1. With this unit the steam pipe is heated by inductive heating which is a process of heating electrically conductive materials like metals by electromagnetic induction. High current generated with a special transformer creates heat in the pipe and nozzles. The saturated steam of reactive compound is converted to superheated steam which is dispersed on substrates coated with crystalline triazine. With superheated steam generator a temperature controller is configured to perform a feedback control in such a way that the temperature can be regulated between 200°C and 2000°C. The steam pipe itself may be connected to one or more pipes which heat the saturated steam before entering the steam pipe.

In one embodiment the steam exciting the exhaust pipe 6 in figure 1 and 2 is condensed and fed back into vessel 4 in such a way that a closed loop treatment system is created. An example of a superheated steam recycling system is described in US9709262B2.

In a further embodiment the use of superheated steam generator such as W-series produced by Tokuden is combined with the use of a heating unit such as Utility Power Super Steamer (UPSS) of the type D-series produced by Tokuden (www.tokuden.com). This method has the advantage that the temperature of superheated steam produced by W-series can be matched with the temperature of D-series heating unit resulting in minimizing a drop in temperature of steam existing the nozzles. The temperature drop can be further minimized by heating the connection pipe between W and D-series by methods already explained. In this way the temperature of steam generated by W series, the connection pipes and temperature of the D-series unit can be matched.

In a further preferred embodiment, the stream treatment unit shown in figure 1 or 2 is retrofitted onto a winding rewinding system such as a roll-to-roll printing line, lamination line, coating line, film inspection line or a slitting machine.

The steam treatment unit is preferably retrofitted in a slitting machine. The main function of a slitting machine is to convert (slit) papers, film and foil materials so that large rolls of these materials can be cut into narrower rolls. A slitting machine consists of three main parts; the unwind, the slitter and the rewind. The steam unit is retrofitted in between the unwind and rewind section. Installing the steam treatment unit in a slitting machine has the advantage that unwind and wind parts can be utilized for the roll-to-roll operation with the added advantage that the steam treatment can be combined with the normal slitting process and therefore eliminating additional processing steps. Suitable slitting machines for retrofitting steam treatment unit are produced for example by Company Kampf (www.kampf.de).

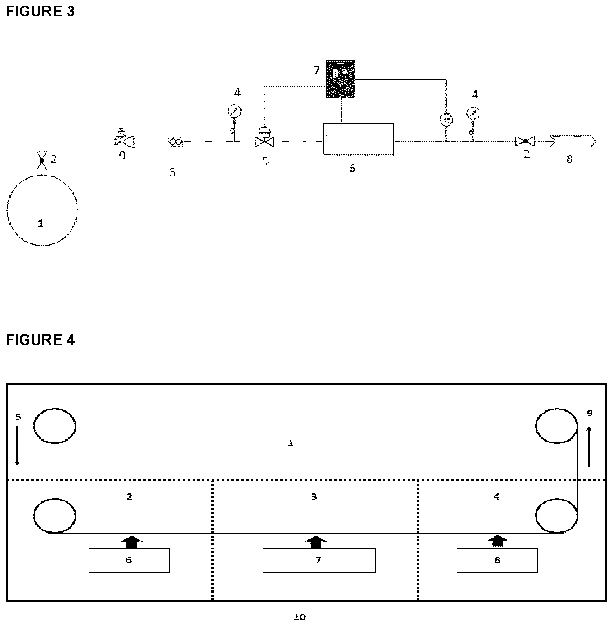

In a further embodiment the steam between the boiler and the nozzles can be regulated by different valves (e.g. control valves and pressure reducing valves), flow meters, and manometers. The purpose of these units is to regulate the pressure, volume and temperature of the steam into the nozzles. An example of such a scheme is shown in figure 3, wherein 1 is a boiler; 2 is a valve (e.g. BSAT AND BSA BELLOWS SEALED STOP VALVES by Spirax Sarco); 3 is a VORTEX INLINE FLOWMETER (e.g. VLM20 Inline Vortex Flowmeter by Spirax Sarco; 4 is a manometer; 5 are control valves for regulating flow (e.g. Spira-trol^{™} or Spirax Sarco 2-way control valves by Spirax Sarco); 6 is a superheater; 7 is a temperature control unit (e.g. Thyristor PID control panel class 0.5 by Jupiter); 8 are the nozzles; and 9 are pressure reducing valve (e.g. BRV2S / BRV2SP by Siprax Sarco).

### Substrate material

The substrate film may consist of a homogeneous material, or it may itself be nonhomogeneous or a composite material. The substrate film may comprise various layers.

Preferably, the substrate is a film with a thickness of between 3 µm - 1 mm, preferably 5 µm - 100 µm.

Preferably, the film comprises a polymeric or cellulose based materials. Examples of polymeric compounds are thermoplastic compounds and thermosetting compounds. Suitable examples of thermoplastic compounds include polyolefins, polyolefin-copolymers, polyvinylalcohol, polystyrenes, polyesters and polyamides. Suitable examples of such polymers include HD or LD polyethlylene (PE), LLD polyethylene, ethylene-propylene copolymers, ethylene-vinylacetate copolymer, polyproplylene (PP) and polyethylene terephtalate (PET). These thermoplastic compounds are often used in the form of a film, either as such or oriented; such orientation may be biaxial, such as for example biaxially oriented polypropylene film (BOPP), biaxially oriented polyethylene terephthalate (BOPET), biaxially oriented polyamide film (BOPA) and biaxially oriented polyethylene (BOPE). The orientation can be carried out either by tender frame sequential-biaxial stretching or tender frame simultaneous-biaxial stretching. Other methods for simultaneous-biaxial orientation include multi-bubble or triple bubble blown process where, initially, a tube is extruded, then rapidly cooled, and then heated to the stretching temperature. A synchronous increase of the draw-off speed and bubble expansion by internal pressure results in the required simultaneous orientation process. Polyethylene film can also be mono-directionally orientated, or machine direction orientated (MDOPE).

In one embodiment, a primer coating may be applied onto oriented polyethylene film. In example embodiments, a skin of the oriented polyethylene film, i.e., substrate, may be treated to provide increased active adhesive sites thereon and to the thus-treated film surface there may be subsequently applied a continuous coating of a primer material. Such primer materials are well known in the art and include, for example, epoxy, poly(ethylene imine) (PEI), and polyurethane materials. U.S. Pat. Nos. 3,753,769, 4,058,645 and 4,439,493, each incorporated herein by reference, discloses the use and application of such primers. The primer provides an overall adhesively active surface for thorough and secure bonding with the subsequently applied coating composition and can be applied to the film by conventional solution coating means, for example, by roller application. The primed oriented polyethylene film is then vacuum coated with Al, AlOx or SiOx and subsequently top coated with a crystalline triazine layer which is then treated with a vapor of reactive compound.

In a further embodiment, an optionally primed skin layer of the substrate may be coated with EVOH polymers. Here EVOH is understood to include EVOH polymers only, EVOH and PVOH polymers, or PVOH polymers only. Coating may be achieved by any known technique. In one example embodiment, the EVOH coating comprises, consists essentially of, or consists of Evalca HR 3010. The EVOH coated oriented polyethylene film is then vacuum coated with Al, AlOx or SiOx and subsequently top coated with a crystalline triazine layer which is then treated with a vapor of reactive compound.

Suitable examples of primed and/or EVOH coated oriented polyethene films are described in US11135820B2.

The polymeric substrates may also contain additives which induce biotransformation rendering fossil-based polymers such as polypropylene biodegradable. Suitable additives for biotransformation are produced by company Polymateria (www.polymateria.com).

In a further embodiment a BOPP film containing additives which makes it biodegradable such as those described in US10570236, is vacuum coated with a melamine layer which is then treated with a vapor of reactive compound. Since melamine is a biodegradable compound, this provides a fully biodegradable barrier coated film solution.

The substrate film may also consist of bio-based material which are either biodegradable or non-biodegradable. Examples of biobased non-biodegradable materials include PE from bioethanol or bio-naphtha, EVA, PVC (partially biobased), PP from waste oils and fats. Examples of Polyamides include PA 5,10; 11 (totally biobased), PA 4,10; 5,6; 6,10; 6,12; 10,10; 10,12 (partial bio);. Examples of polyester include PET (totally biobased) PEF - polyethylene furanoate, PTF - polytrimethylene furanoate. Examples of biobased and biodegradable materials include: Polylactic acid (PLA), Polyhydroxyalkanoates (PHAs; PHB, PHBV, PHBH, PHBO etc), Aliphatic and aliphatic/aromatic copolyesters (PBS, PBSA, PBAT, PCL), Starch blends and derivatized starch blends, Polyvinyl alcohol and polyglycolic acid. Other examples include protein-based materials, e.g., keratin-, zein-, casein-, whey and soy-based (e.g., whey-based barrier layers; Lactips/BASF casein-based water-soluble polymers), and Polysaccharides (e.g., Chitosan) and bacterial-, algal- and fungal-based materials.

In one preferred embodiment a compostable film such as PHA or films produced by Company Tipp (tipa-corp.com) is (optionally vacuum coated with Al, AlOx or SiOx and subsequently top) coated with a crystalline triazine layer which is then treated with a vapor of reactive compound. Vacuum coated crystalline triazine layers such as melamine have the advantage that they do not have a negative effect on compostability.

In case the substrate is cellulose based such as paper, there are no particular limitations on the type of paper base material and can be suitably selected from printing paper or packaging paper corresponding to the application. Examples of the paper base material include glassine paper, parchment paper, high-grade printing paper, intermediate-grade printing paper, low-grade printing paper, printing tissue paper, colored high-quality paper, art paper, coated paper, Kraft paper, container board, coated cardboard, ivory paper, cup base paper, calendared paper and super-calendared paper.

The basis weight of the paper base material is preferably 600 g/m2 or less, more preferably 30 g/m2 to 500 g/m2, even more preferably 150 g/m2 to 400 g/m2, and most preferably 180 g/m2 to 400 g/m2.

In a preferred embodiment a clay coated paper with a weight of 40-100 g/m2 is first precoated with a water based or solvent based lacquer using for example direct or offset gravure coating to smoothen the surface of paper and then vacuum coated with Al, AlOx or SiOx and subsequently top coated with a crystalline triazine layer which is then treated with a vapor of reactive compound. Finally a sealant layer can be applied for example by direct or offset gravure coating on top of the treated triazine layer to provide sealability.

The treatment with a vapor of reactive compound can also be incorporated with application of a crystalline triazine layer on a substrate such as paper using an organic release layer in a process described in WO2020/229675.

### Low pressure processing

In a further preferred embodiment of the invention, the crystalline triazine compound may comprise in principle, any triazine compound, for example melamine, melam, melem, or melon.

Preferably, the triazine compound is melamine.

The thickness of the triazine layer generally is about 10 to 300 nanometer.

For applications where the triazine is deposited directly on the substrate the preferred thickness is between 50 and 300nm.

For applications where the triazine layer is applied on metal (e.g. Al) or metal oxide (e.g. AlOx or SiOx) coated substrates, the preferred thickness is between 10 and 60 nm.

The crystalline triazine compound may be vapor deposited according to well-known methods. Vapor-depositing as such is a process known to the skilled person and it is preferably carried out in a roll-to-roll process. The vapor-depositing step is carried out at a reduced pressure, i.e. a pressure below atmospheric pressure. In the process according to the invention, the pressure generally is below about 1000 Pa (10 mbar), preferably below about 100 Pa (1 mbar) even more preferably below about 10 Pa (0.1 mbar). It is possible to combine the deposition of crystalline triazine compound with deposition of metal-(oxides). In this case it is beneficial to separate by a partition wall the evaporation zone for metal (oxide) and crystalline triazine compound. This would prevent mixing of various vapors which will results in better performance. The compartment for deposition of crystalline triazine has a pressure between 1 Pa (1×10⁻² mbar) and 0.1 Pa (10⁻³ mbar). Generally, the compartment for the vapor-deposition of metal or metal-oxides has a pressure of about 0.1 Pa (10⁻³ mbar) to 0.01 (10⁻⁶ mbar).

During the vapor-depositing step, the temperature of the substrate is about -60° C or higher, preferably about -30° C or higher, and even more preferably about -20° C or higher, and most preferable about -15° C or higher. The temperature of the substrate generally will be about +125° C or lower, preferably about +100° C or lower, even more preferably about +80° C or lower, and most preferably about 30° C or lower. If the vapor-depositing step is done on a substrate which is guided over a temperature-controlled coating drum, the temperature of the substrate is the temperature at which the coating drum is controlled.

An apparatus suitable for vacuum deposition of crystalline triazine compound in a roll-to-roll setup is an apparatus for depositing a metal or metal-oxide under vacuum on a substrate, comprising winding rolls and at least one vacuum chamber with a metal or metal-oxide deposition part and/or deposition of crystalline triazine compound part comprising an triazine compound evaporator.

Apparatus for vapor depositing metal, metal oxide and or triazine compound such as melamine are known.

In a preferred embodiment, the vapor depositing apparatus comprises a vacuum chamber and a heater for evaporating crystalline triazine compound wherein the evaporator is heated by electrically powered heaters. Another preferred method to heat the evaporator is by jacketed design. Here the crystalline triazine resides in the core part of the evaporator, while a heating medium flows in the annular space between the core and outer part of the evaporator. The heating medium can be superheated steam generated by a superheater or thermal oil. The heating medium is preferably a thermal oil such as Marlotherm SH produced by Eastman (https://chem-group.com/wp-content/uploads/2020/07/Marlotherm-SH-TDS.pdf. The thermal oil is heated for example by i-Temp oil temperature control unit produced by ICS Cool Energy (https://www.icscoolenergy.com/sales/product/oil-temperature-control-unit/). This unit offers precision-control of temperatures up to 400°C.

In one embodiment, the evaporator is preferably placed outside the vacuum chamber, but it is linked by a heated gas into the vacuum chamber. This has the advantage that the evaporator can stay at the operating temperature when the vacuum chamber is opened to place the next roll which is to be coated. In this way the effective cycle times can be increased.

In a further embodiment the roll-to-roll vacuum deposition is carried out in an air-to-air system whereby the substrate enters the vacuum chamber at atmospheric pressures and exits the chamber after being vacuum deposited with different layers, again to atmospheric pressure. This method has the advantage that vacuum deposition can be combined in-line with the process of steam treatment as outlined in figure 1 and 2.

In a preferred embodiment, the steam treatment unit is placed in a vacuum chamber as shown in figure 4. Here vacuum chamber 10 is divided into different compartments with different or similar pressures:
- Compartment A (1) is unwinding and winding
- Compartment B (2) is metal-(oxide) deposition (Optional)
- Compartment C (3) is Triazine (e.g. melamine) deposition
- Compartment D (4) is steam treatment section

Figure 4 shows a simplified schematic of the vacuum chamber which may consist of various rolls guiding the substrate (5) through various compartments. Substrate (5) is first passed through Compartment A (1) where it may be optionally coated with a metal (e.g. Al) or metal oxide (AlOx or SiOx) layer in Compartment B (2) by the metal-(oxide)evaporator (6). Substrate (5), optionally coated with metal or metal oxide layer, is coated with a triazine compound, e.g. melamine, in Compartment C (3) by a triazine (e.g. melamine) evaporator (7). Triazine coated substrate is treated in Compartment D (4) with superheated steam from steam box (8) in a process like the one outlined in figure 1 or figure 2. The triazine coated substrate after treatment with reactive vapor (9) is wound in compartment A (1) and is ready for further handling and use.

The pressure in Compartment A (1) for unwinding and winding the substrate is between 1 Pa (1×10⁻² mbar) to 0.1 Pa (1×10⁻³ mbar). The pressure in Compartment B (2) for vapor deposition of metal or metal oxides is about 0.1 Pa (1× 10⁻³ mbar) to 10⁻⁴ Pa (1 × 10⁻⁶ mbar). The pressure in Compartment C (3) for vapor deposition of crystalline triazine compound is preferably carried out at a pressure between 10 Pa (1× 10⁻¹ mbar) to 0.01 Pa (1×10⁻⁴ mbar). The pressure in Compartment D (4) for steam treatment is preferably carried out at a pressure between 10 Pa (1× 10⁻¹ mbar) to 1 Pa (1×10⁻² mbar).

In one embodiment Compartments C (3) and D (4) are combined into one Compartment. The pressure is then preferably between 10 Pa (1× 10⁻¹ mbar) to 0.1 Pa (1×10⁻³ mbar).

In a further embodiment Compartments A (1), C (2) and D (3) are combined into one Compartment. The pressure is then preferably between 10 Pa (1× 10⁻¹ mbar) to 0.1 Pa (1×10⁻³ mbar).

In general the amount of steam dispersed on substrate is preferably 100 kg/hour or less, more preferably 20 kg/hour, even more preferably 5 kg/hour or less. Generally, the amount of steam is about 0.1 kg/hour or more, preferably about 1 kg/hr or more.

However when deposition of triazine in Compartment C (3) is combined with steam treatment in Compartment D (4), it is important that the pressure is chosen in such a manner that triazine can be successfully deposited. Simulation data indicate that in order to maintain a pressure of 1 Pa (1×10⁻² mbar) needed for deposition of triazine, maximum flow rate of steam should be 5,75 kg/hour.

The steam pipes can be similar to steam pipe for treatment under atmospheric pressure containing holes or nozzles as described before. As in treatment under atmospheric pressure, it is important that under vacuum the steam pipes are heated to the same temperature as the temperature of steam. Similar methods for heating of the steam pipe under vacuum can be used as those already explained for the heating of steam pipe under atmospheric conditions, i.e. electrical hearing tracing, double jacketed heating, and inductive heating. The heating can also be carried out by electron beam heating.

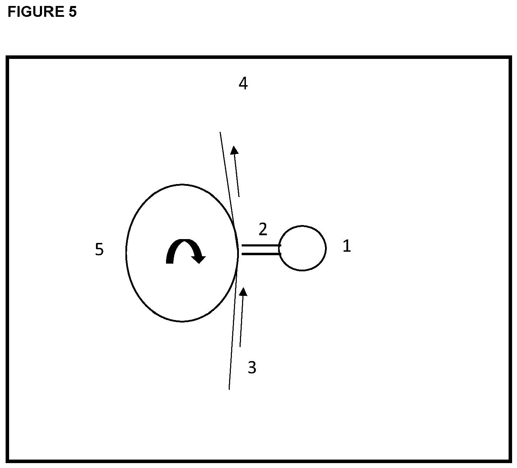

In a preferred embodiment heated shields are added to the steam pipe. This is shown in Figure 5. When steam exists the steam pipe (1), it will rapidly expand under vacuum. To prevent expansion and thus ensuring that steam arrives on top of the substrate (3), the steam can be guided by shields (2) confining the steam to the area between the steam pipe (1) and substrate (3). It is important that the shields (3) are heated to the same temperature as the temperature of steam pipe (1) to avoid condensation on the shields. This can be accomplished by for example electrical heat tracing, inductive heating or electron beam heating as explained before. (4) denotes the vacuum chamber and 5 the coating drum.

In a further preferred embodiment the substrate is heated before, during and/or after steam application by methods already explained such as heated guide rollers or radiation heating sources, e.g. UV, IR, NIR. Other heating methods include electron beam heating.

### Printing processes

Films that are used in the packaging industry, in particular in the food packaging industry, generally have both protective and decorative purposes. For these purposes, a variety of technologies is available. The decorative aspect is provided by printing. The two common printing methods in flexible packaging using plastic films are flexo and gravure.

Flexo printing is provided by having a large guiding central drum around which smaller printing drums are located; the small drums being from rubbery material. The film is subjected to relatively small mechanical curve-forces, as the large inner drum determines the curve to which the film is subjected. On the other hand, the press-forces are higher than in gravure, as the small rolls with the printing patterns exert pressure at the places where the pattern is to be printed. Yet, the roll is of rubbery material, which softens the pressure somewhat. The exerted pressure is relatively small as too much pressure may result in bad printing quality. The inks in flexo are generally based on a mixture of alcohol and ethylacetate. Solvents based on ethylacetate only would deteriorate the rubber roll. Generally, several printing stations are used (with e.g. different colors and different patterns), and the inks are to a certain extent, but not fully, dried in between the different printing stations. This printing technology approaches wet-on-wet printing.

Gravure printing (also named roto-gravure) is provided by having multiple stations with smaller drums; the drums being from metal. The film is subjected to higher mechanical curve forces, as each time the smaller drums cause the film to curve over a smaller radium than the large drum in flexo. Yet, the press forces are smaller than in flexo, because the ink is present in small recesses in the metal roll. The inks in gravure are generally based on large amount of ethyl acetate, and small amount of alcohols as this allows high speed drying. Generally, each applied layer is dried in an oven, leading to substantial wet-on-dry printing.

Inks generally comprise a binder, a pigment, additives and solvents. The binder generally is a polymer like (PU) polyurethane, (PA) polyamide, (PVB) Poly Vinyl Butyral, (CAB) cellulose acetate butyrate, (PVC) polyvinylchloride, (PVA) polyvinylalcohol and polyacrylates (acrylic). The pigments are widely available and generally are concentrated pigments dispersed in dispersants. The pigments may be based on inorganic materials such as TiO₂ for white ink or organic materials. Additives are for example waxes, flow agents and dispersants like nitrocellulose.

As explained, the substrate with the crystalline triazine layer can be printed with methods known in the art such as for example flexography and gravure (or letterpress) printing. Following types of inks can be used:
- UV (ultra violet) inks
- EB (electron beam) inks
- PVB (Poly Vinyl Butyral) inks
- PVC (Poly Vinyl Chloride) inks
- NC inks
- Polyamide inks
- Polyurethan inks
- Water based inks

UV inks are more preferred for Flexo than for Gravure, because of the viscosity. The ink may have too high viscosity for gravure and therefore the ink would not be able to reach all the holes in the gravure plate.

UV Curable screen printing ink is a 100% solid system: that is, it essentially does not contain solvent that must evaporate during the curing phase. The cure takes place through the interaction of the ink ingredients and a strong UV light source in a dryer. Solvent inks may have better coverage, and they are relatively inexpensive, while having good durability. UV curable inks have the advantage of lack of VOC's, rapid curing and excellent color value. Some disadvantages can be: The ink is not applicable on all substrates, it cannot be printed on dark substrates; the outdoor durability may be limited, they may be less suitable for high levels of abrasion; they tend to be less flexible, and they are more sensitive to proper cure procedures.

EB inks are suitable as well. Both UV and EB systems typically use acrylate materials (although other special chemistries are available) that cure by free radical polymerization. In the case of UV curing, the UV light is absorbed by chemicals called photoinitiators. These materials convert the UV light into free radicals. The free radicals cause the acrylate materials to chemically react and form acrylic polymers. In EB curing, a photoinitiator is not needed. The energy of the electrons is enough to directly cause the acrylate materials to polymerize by opening the acrylate bonds to form free radicals. These radicals then attack the remaining acrylate bonds until the reaction reaches completion. UV curing and EB curing inks, coatings and adhesives, when properly formulated, applied and cured, can satisfy the needs of many applications. EB chemistry more easily meets the needs of low odor, low off-taste applications. For thick films, opaque colors and through-film curing, EB is more appropriate. UV/EB inks are quite common in food packaging. UV inks are mostly used for label applications. The potential for migration of hazardous photoinitiators in to the package limits the use of such types of inks.

PVB inks can be well used both in Flexo and in Gravure, as they are well soluble in alcohols, and partly soluble in esters. Inks based on PVB resins are widely used for retort applications because of their effective adhesion and heat stability: The resins melt at about 110°C (230°F) but the molecules are stable up to about 250°C (482°F). PVB inks have some disadvantages: the most important is the incompatibility between the adhesion promoters used in PVB inks and nitrocellulose (NC). Printers using both NC and PVB inks must thoroughly clean presses and auxiliary equipment (hoses, ink pumps, ink containers, cylinders, etc) between runs to avoid poor print quality.

PVC inks are less suitable in Flexo, and more suitable in Gravure. PVC copolymers have long been used in inks for retort applications in Europe. These inks do not require adhesion promoters and they perform on plain and coated films, give excellent print results and can be laminated with most adhesives. There are, however, two disadvantages: PVC inks are only soluble in esters and ketones, making them unsuitable for flexo printing. The chlorine content also makes PVC inks difficult and expensive to dispose of - high temperature incineration is typically required.

Nitrocellulose inks (NC inks) are well suited for Flexo and for Gravure. Nitrocellulose -based inks are the modern global standard for most flexo and gravure printing. However, they are not suitable for retort applications because NC degrades at high temperatures. These inks also typically require PU and PA co-binders. NC inks are also not preferable when printed plastic is to be mechanically recycled because these inks result in discoloration at high temperatures used for mechanical recycling. For such applications PU-based inks are preferred.

Polyurethanes (PU) binders can be used both for Flexo and for Gravure. The PU resins in use today are employed mostly as co-binders in NC, PVB and PVC systems.

PA binders are used in both Flexo and Gravure. Polyamides (PA) are standard ink resins in North America, typically used with cellulose acetate butyrate (CAB) and PVB coresins. PA inks provide good bond strength on many substrates and excellent printability; they are suitable for both flexo and gravure printing. They share the limitations of the PVB resins as they also require adhesion promoters, which make PA inks incompatible with NC.

The colour of an ink system is created by using pigments or dyes. Typically, pigments are insoluble, whereas dyes are soluble, though sometimes these terms are used interchangeably in commercial literature. Ink pigments are both inorganic and organic. Most white inks contain titanium dioxide as the pigment; black color is created with carbon black. Metallic pigments like aluminium powder (aluminium bronze) and copper-zinc alloy powder (gold bronze) are used in novel silver and gold inks. Miscellaneous inorganic pigments provide luminescent and pearlescent effects.

Suitable pigments or dyes for printing inks are for example: Diarylide Yellow, Benzimidazolone (yellow or red), Disazopyrazolone (orange), Naphthol (red), Triarylcarbonium (red or blue), and Cu Phthalocyanine (blue or green),

### Lamination

In one preferred embodiment the substrate coated with crystalline triazine layer treated with steam is laminated between two other substrates, so called triplex laminates. For example a melamine coated PET or OPA is laminated on one side against an OPP, which is optionally (reverse) printed, and on the other side to a sealant film (e.g. PE or CPP). It has been found that such laminate structures have excellent barrier properties especially at high humidity's.

In a further preferred embodiment a polypropylene based film (either CPP or BOPP) is vacuum coated with Al, AlOx or SiOx and subsequently top coated with a crystalline triazine layer which is then treated with a vapor of reactive compound. Prior to vacuum deposition a thin layer of EVOH, polyamide or a lacquer may be applied (coextruded) on BOPP. AlOx coating on BOPP and CPP may be combined with plasma assisted deposition technologies know to the person skilled in the art.

As an adhesive, solvent based adhesives or solventless systems can be used. Both one and two components adhesives for example based on isocyanates as the hardener can be used. In a preferred embodiment of the invention, the adhesive has a good adhesion to the printed layers, and has a high strength. Suitably, the adhesive has a low expansion, high Tg, high crosslink density and a high intrinsic water barrier. Examples of adhesives include various type of UV- or thermal curable resins based on acrylates, water based adhesives, epoxies, isocyanates (urethanes), and polyester. Particularly preferred are polyester based adhesives.

Extrusion lamination can also be used for lamination. The direct extrusion lamination is preferably performed at a relatively low temperature. A low temperature saves energy and improves barrier characteristics. Generally, extrusion lamination is performed at about 400 °C to oxidize the extruded film in order to improve adhesion in other systems. It appeared that such high temperature is not necessary, so, preferably, the extrusion lamination is performed at a temperature of about 350 °C or lower, even more preferable about 300 °C or lower, and most preferred about 200 °C or higher.

In a preferred embodiment of the invention, the laminate with barrier properties is sealable. This can be achieved by laminating the triazine coated substrate treated with steam against sealants based on polyethylene (PE) or cast polypropylene (CPP). It is also possible that a carrier substrate, on which crystalline triazine compound is deposited, is sealable on one side, such as sealable BOPP. It is also possible that the carrier substrate with crystalline triazine compound and optionally a print pattern is coated with a so-called hot seal or cold seal coating. The latter two examples are called monoweb applications.

In a preferred embodiment an oriented PE film such as MDOPE or BOPE, optionally coated with a metal (oxide) layer, is coated with a crystalline triazine layer treated with steam, optionally reverse printed and laminated with a sealant film such as PE. In case a metal (oxide) layer is used, oriented PE film may be optionally coated with a primer and/or a EVOH layer as described previously.

In a preferred embodiment a polypropylene film such as CPP or BOPP, optionally coated with a metal (oxide) layer, is coated with a crystalline triazine layer treated with steam, optionally reverse printed and laminated with a sealant film such as CPP, BOPP or PE. In case a metal (oxide) layer is used, polypropylene film may be optionally with a primer and/or a EVOH layer as described previously.

In a preferred embodiment a compostable film such as PHA or PLA, optionally coated with a metal (oxide) layer, is coated with a crystalline triazine layer treated with steam, optionally reverse printed and laminated with a compostable sealant film such as PLA.

In a further preferred embodiment, a substrate with a crystalline triazine layer treated with steam itself can be sealed without additional sealant material. In this case crystalline triazine layer treated with steam acts as the sealant layer.

Preferably the multilayer substrate, when laminated at the side of the crystalline triazine compound treated with steam comprising an optionally print layer, with an adhesive and a plastic film is able to exhibit a lamination strength of about 2.5 N/inch or more, more preferably of about 3 N/inch or more, even more preferably of about 3.5 N/inch or more as measured with a tensile testing apparatus at 30 mm/min and at 90 degree. The upper limit of the lamination strength is not critical, but generally, this will be about 20 N/inch or less. The lamination of the composite layer for testing preferably is done with an appropriate urethane adhesive and laminated with a 30-100 µm thin polyethylene film or CPP films with similar thickness range. The precise thickness does not have substantial influence on the threshold value; as far as influence would be observed, the test should be done with a 50 µm polyethylene; and if CPP is defining the value, 50 µm CPP (cast polypropylene). Thereafter, the lamination strength of the two films can be measured, and the failure mode can be observed. An appropriate adhesive is an adhesive that has such adhesion strength that the failure mode is not observed on the adhesion layer. The adhesion may be so high that the plastic film breaks. The value of the force necessary to break a film can in that case be taken as value for adhesion.

### Oxygen and water vapor barrier

The substrate coated with triazine compound according the invention has favorable barrier properties, for example a low oxygen transmission rate (OTR) and a low water vapor transmission rate (WVTR).

The OTR is generally measured in an atmosphere of 20 - 30 °C and between 0 % and 85% RH. The preferred values generally depend on the substrate. In case the substrate is biaxially oriented polypropylene (BOPP), the OTR generally will be about 400 cc/m²·24h or less, preferably about 300 cc/m²·24h or less and even more preferred about 200 cc/m²·24h or less. Generally, in case of BOPP, the OTR will be about 5 cc/m²·24h or higher, and for example may be about 20 cc/m²·24h or higher. The OTR can be measured with suitable apparatus, such as for example with an OXTRAN 2/20 manufactured by Modern Control Co. In case the substrate is a PET film, the OTR generally will be about 50 cc/m²·24h or less, preferably about 30 cc/m²·24h or less and even more preferred about 10 cc/m²·24h or less. Generally, in case of PET, the OTR will be about 0.1 cc/m²·24h or higher, and for example may be about 0.3 or 1 cc/m²·24h or higher.

Water vapor permeability (WVTR) can be measured with a PERMATRAN 3/31 manufactured by Modern Control Co, in an atmosphere of 25 - 40 °C and between 50 and 90% RH. The preferred values will depend on the substrate. For example for BOPP the WVTR is generally about 3 g/m²·24h or less, preferably about 2 g/m²·24h or less, and more preferably about 1 g/m²·24h or less. Generally, the vapor permeability will be about 0.1 g/m²·24h or more, for example about 0.2 g/m²·24h or more. For example for PET, the WVTR is generally about 8 g/m²·24h or less, preferably about 7 g/m²·24h or less, and more preferably about 4 g/m²·24h or less. Generally, the WVTR will be about 0.5 g/m²·24h or more, for example about 2 g/m²·24h or more.

Preferably, the laminate has an OTR and WVTR also for other substrates, which is conform the values given in the former two paragraphs.

### EXAMPLE 1

A PET-film (Melinex S) of 12 µm thickness was vacuum coated with a continuous layer of crystalline melamine. The coated roll was then placed in a roll-to-roll set up similar to the one shown in Figure 1. A solution of 1% formaldehyde with a pH of 7 was fed into a Certuss Boiler type E27 generating saturated steam between 0,4-1 mPa. 40x nozzles of the type CD3 produced by Eurospray (https://www.euspray.com/en/home-page-en/) were mounted on a 60 cm steam pipe made from 304 stainless steel with a diameter of 42 mm and wall thickness of 2 mm. The melamine coated PET film was then exposed to various volume of steam containing 1% of formaldehyde at different speeds. The distance between the outlet of the nozzles and the film was varied between 1.5 - 6 cm.

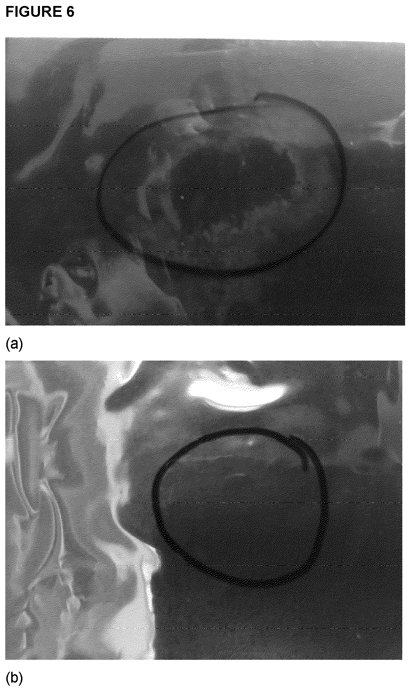

Figure 6 shows the photographic images on the effect of a droplet of ethanol on melamine coating both before (a) and after (b) treatment with steam and formaldehyde. As can be seen without treatment, ethanol leaves a white spot on melamine coating indicating that the layer has been damaged by the action of ethanol. After treatment with steam with formaldehyde, however, no white spot can be observed indicating that ethanol has not damaged the melamine coating. The same results are observed when a test was done with a drop of water; the non-treated melamine layer left a white spot, while the treated melamine layer was not damaged.

Next both the treated and untreated melamine coated PET film were printed on a flexography machine with Cyan and white inks both produced by Huber Group. The types of inks are as follows: Cyan 15470 Flexo and HS Xtreme White C3. Both inks comprise ethanol as main solvent.

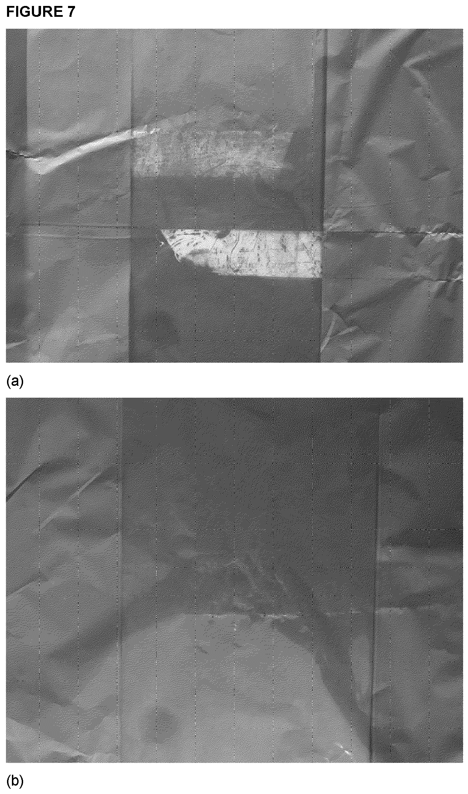

Figure 7 shows the tape test on printed melamine coating both before (a) and after (b) the steam with formaldehyde treatment. It is clearly shown that without treatment the ink is removed after pulling off the scotch tape at an angle of 90°. After treatment with steam and formaldehyde, no ink is removed after pulling off the scotch tape showing that the treatment has drastically improved the ink adhesion on melamine coating.

### Example 2

A PET film which was metallized with AlOx and coated with a crystalline melamine layer, was treated in the same way as the film in example 1. The film so obtained showed, like the film of example 1, good adhesion of the ethanol based printing ink in a 90° adhesion test.

## Claims

1. A coated substrate comprising a substrate and a crystalline triazine layer, said crystalline triazine layer comprising alkylolated triazine wherein said layer is resistance to alcohol.

2. Coated substrate according to claim 1 wherein the crystalline triazine layer comprises alkylether and/or alkylene bridged triazine.

3. Process for preparing a coated substrate, the process comprising:
a) providing a coated substrate having a crystalline triazine layer wherein the substrate optionally has a metal or metal oxide layer between the substrate and the triazine layer.
b) applying a vapor of a reactive compound capable of chemically reacting to the said triazine layer, such that the triazine is alkylolated and/or that the triazine layer comprises alkylether and/or alkylene bridged triazine.

4. Process according to claim 3, wherein the reactive compound is an aldehyde, more preferably formaldehyde.

5. Process according to any one of claims 3-4, wherein the reactive compound is dissolved in water.

6. Process according to any one of claims 3-5, wherein the treatment of crystalline triazine layer with a vapor of a reactive compound is carried out in a continuous roll-to-roll process at atmospheric pressure incorporated for example in a slitting machine.

7. Process according to any one of claims 3-5, wherein, the treatment of crystalline triazine layer with a vapor of a reactive compound is carried out in a continuous roll-to-roll process under reduced pressure directly after deposition of crystalline triazine layer.

8. Process according to any one of claims 3-7, wherein the reactive compound is applied in superheated steam, preferably sprayed at a distance of between 0.5 cm - 10 cm onto the crystalline triazine layer.

9. The method according to any one of claims 3-8 wherein crystalline triazine layer is applied by vacuum deposition.

10. Coated substrate or process according to anyone of the preceding claims, wherein the triazine is melamine.

11. Coated substrate or process according to anyone of the preceding claims, wherein the substrate is a film with a thickness of between 3 µm - 1 mm, preferably 5 µm - 100 µm.

12. Coated substrate or process according to anyone of the preceding claims, wherein the substrate is a plastic film, preferably BOPET, BOPP, MDOPE, BOPE, CPP, PLA, and PHA optionally provided with an alumina layer, AlOx or SiOx layer.

13. Coated substrate or process according to anyone of claims 1-11, wherein the substrate is a cellulose-based material such as paper more preferably a clay coated paper first precoated with a water based or solvent based lacquer optionally provided with an alumina layer, AlOx or SiOx layer.

14. Packaging, preferably food or non-food packaging, comprising a coated substrate according to any one of claims 1-2 and 9-13.

15. Treatment apparatus suitable for the process according to any one of claims 3-13, comprising: (i) optionally, a vacuum chamber, (ii) optionally, a metal (oxide) source, (iii) a heater for evaporating the crystalline triazine compound, and (iv) a steam treatment unit.
